# EUROPEAN PATENT SPECIFICATION

(11) **EP 1 518 767 B1**
(45) Date of publication and mention of the grant of the patent: **09.08.2006**
(21) Application number: 04020153.5
(22) Date of filing: 25.08.2004
(51) Int. Cl.: B60S 1/04

(54) **Front structure for a vehicle**
Fahrzeugvorderbau
Structure avant d'un véhicule automobile

(30) Priority: 26.09.2003 JP 2003335381
(43) Date of publication of application: 30.03.2005
(73) Proprietor: ASMO CO. LTD., Kosai-shi Shizuoka-ken 431-0493 (JP)
(72) Inventor: Nakatsukasa, Tetsuya, Kosai-shi Shizuoka-ken 431-0493 (JP)
(74) Representative: Geyer, Fehners & Partner

(56) References cited:
- EP-A- 1 346 903
- PATENT ABSTRACTS OF JAPAN vol. 2000, no. 20, 10 July 2001 (2001-07-10) & JP 2001 071871 A (DAIHATSU MOTOR CO LTD), 21 March 2001 (2001-03-21)
- PATENT ABSTRACTS OF JAPAN vol. 2002, no. 11, 6 November 2002 (2002-11-06) & JP 2002 200969 A (FUJI HEAVY IND LTD), 16 July 2002 (2002-07-16)
- PATENT ABSTRACTS OF JAPAN vol. 2000, no. 14, 5 March 2001 (2001-03-05) & JP 2000 326833 A (MITSUBISHI MOTORS CORP), 28 November 2000 (2000-11-28)
- PATENT ABSTRACTS OF JAPAN vol. 007, no. 068 (M-201), 19 March 1983 (1983-03-19) & JP 57 209447 A (NISSAN JIDOSHA KK), 22 December 1982 (1982-12-22)

## Description

### BACKGROUND OF THE INVENTION

The present invention relates to the front structure for a vehicle that is equipped with a wiper device, which is located in a front cowl.

Vehicles such as automobiles are equipped with a wiper device for wiping the windshield glass. The wiper device is located in a cowl box. An object might collide with the wiper device thereby applying an impact load on the wiper device. Therefore, the vehicles are desired to have the ability to absorb such impact load (collision energy).

Japanese Laid-Open Patent Publications No. 2001-71871 and No. 2002-200969 disclose a technology for absorbing an impact load applied to a wiper device. According to the technology of the above publications, the wiper device moves downward when an object collides with the wiper device from above. This absorbs the collision energy of the object and reduces the impact load applied to the wiper device.

Thus, sufficient space needs to be provided between the lower part of the wiper device and the bottom wall of the cowl box to permit the wiper device to move downward. However, such space is only provided for just in case an object collides with the wiper device and is useless in other cases. This increases the size and the cost of the cowl box. Contrarily, if the space is insufficient for permitting the wiper device to move downward, the_impact load applied to the wiper device is not reduced adequately.

### SUMMARY OF THE INVENTION

Accordingly, it is an objective of the present invention to provide a front structure for a vehicle that reduces an impact load applied to a wiper device in a suitable manner.

To achieve the foregoing and other objectives and in accordance with the purpose of the present invention, a front structure for a vehicle is provided. The front structure for a vehicle includes a wiper device, which is capable of moving downward. At least part of the wiper device is accommodated in a front cowl. The front cowl has a bottom wall located below the wiper device. The bottom wall is provided with an opening having a size sufficient for permitting at least part of the wiper device through. The opening is closed by a closing member. When the wiper device moves downward, the closing member deforms or breaks to open the opening to permit at least part of the wiper device to pass through.

Other aspects and advantages of the present invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a cross-sectional view illustrating a front structure for a vehicle according to a first embodiment of the present invention;
Fig. 2 is a cross-sectional view illustrating the front structure shown in Fig. 1 when an object collides with the wiper device;
Fig. 3 is a cross-sectional view illustrating a front structure for a vehicle according to a second embodiment of the present invention; and
Fig. 4 is a cross-sectional view illustrating a front structure for a vehicle according to a third embodiment of the present invention.

### DETAILED DESCRIPTION OF THE PREFERRED EMBODIMENTS

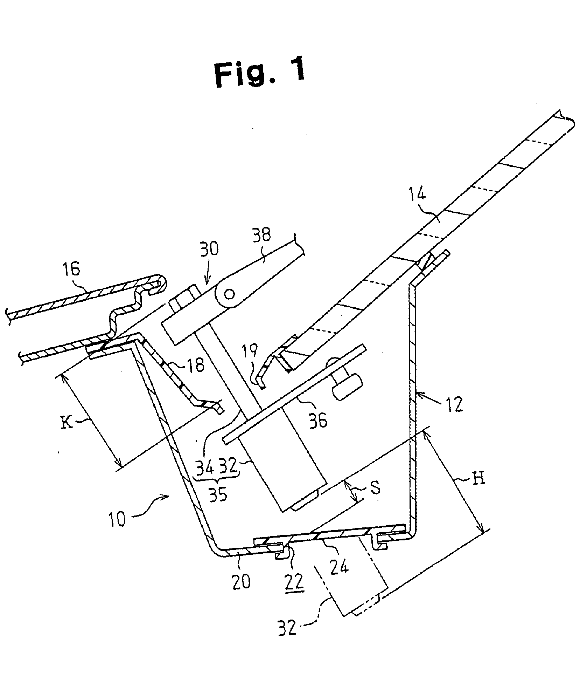

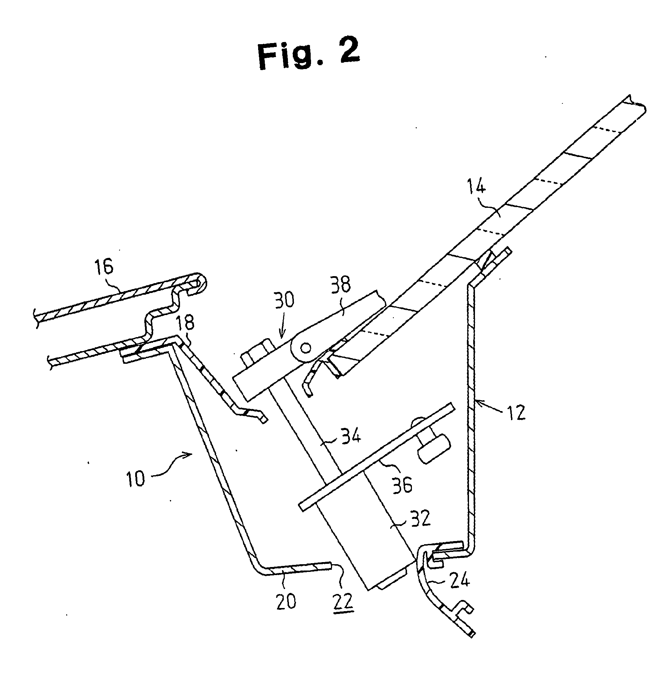

A first embodiment of the present invention will now be described with reference to Figs. 1 and 2.

A front structure 10 for a vehicle according to the first embodiment shown in Figs. 1 and 2 includes a front cowl 12 and a wiper device 30.

The front cowl 12 is box-shaped and has an opening at the top. The rear portion of the front cowl 12 (right portion as viewed in Figs. 1 and 2) is located below the windshield 14 of the vehicle and is attached to the lower surface of the windshield 14. The front portion of the front cowl 12 (left portion as viewed in Figs. 1 and 2) is located below the engine hood 16 of the vehicle. The upper opening of the front cowl 12 is closed by a part of the windshield 14 and a cowl garnish 18. The cowl garnish 18 extends from the lower edge of the windshield 14 to the upper edge of the front portion of the front cowl 12. The cowl garnish 18 includes a pair of pivot holes 19.

The wiper device 30 is located in the front cowl 12. The wiper device 30 includes a pair of pivot holders 32, a pair of pivot shafts 34, a pair of pivot levers 36, a pair of wiper arms 38, and a pair of wiper blades, which are not shown. Each pivot shaft 34 is rotatably supported by the corresponding pivot holder 32. Each pivot holder 32 and the corresponding pivot shaft 34 form a wiper pivot 35. Each pivot lever 36 is attached to the proximal end of the corresponding pivot shaft 34. Each wiper arm 38 is attached to the distal end of the corresponding pivot shaft 34. Each wiper blade is attached to the corresponding wiper arm 38. The wiper arms 38 are rotated when the drive force of the wiper motor, which is not shown, is transmitted to a link mechanism, and the direction of rotation alternates. As a result, the wiper blades wipe a wiping surface, which is the surface of the windshield 14 in this embodiment.

The pivot holders 32 and the pivot levers 36 are located below the pivot holes 19. The wiper arms 38 are located above the pivot holes 19. Each pivot shaft 34 is located in the corresponding pivot hole 19.

The front cowl 12 has a bottom wall 20, and an opening 22 is formed in the bottom wall 20. The opening 22 has a size that is sufficient for permitting at least part of the wiper device 30 to pass through. The size of the opening 22 is particularly sufficient for permitting part of the wiper device 30 that projects downward such as the pivot holders 32 or the wiper motor, which is not shown, to pass through. The opening 22 is closed by a closing member, which is a plate-like elastic lid 24 in the first embodiment. The lid 24 is engaged with part of the bottom wall 20 around the opening 22. The lid 24 is formed of elastic material such as resin or rubber. The lid 24 is elastically deformed to be detached from the bottom wall 20 when receiving a load that is greater than or equal to a predetermined degree.

The wiper device 30 can be moved from a normal position where the pivot holders 32 are located at the position shown by a solid line in Fig. 1 to a maximum retraction position where the pivot holders 32 are located at the position shown by a chain double-dashed line in Fig. 1. The normal position is the position of the wiper device 30 in the normal state and the maximum retraction position is the position where the wiper device 30 is moved downward to the maximum. The wiper device 30 goes through a middle retraction position when moving from the normal position to the maximum retraction position. The middle retraction position is the position where the wiper device 30 is moved downward until the pivot holders 32 contact the lid 24. The movement distance S (see Fig. 1) of the wiper device 30 from the normal position to the middle retraction position is less than the movement distance H (see Fig. 1) of the wiper device 30 from the normal position to the maximum retraction position. The movement distance H is greater than or equal to the length K (see Fig. 1) of the portion of each pivot shaft 34 that projects upward from the corresponding pivot hole 19 when the wiper device 30 is located at the normal position.

When an object collides with the wiper device 30 from the above and an impact load is applied to the wiper device 30, the wiper device 30 moves downward from the normal position as shown in Fig. 2. When the wiper device 30 moves further downward from the state where the wiper device 30 has reached the middle retraction position and the pivot holders 32 are in contact with the lid 24, the lid 24 is pressed by the pivot holders 32 and is elastically deformed to be detached from the bottom wall 20. As a result, the opening 22 is opened to permit the pivot holders 32 to pass through. Therefore, the wiper device 30 can further move downward from the middle retraction position. Thus, the collision energy of the object is absorbed and the impact load applied to the wiper device 30 is reduced.

As described above, in the front structure 10 for the vehicle according to the first embodiment, only the space that corresponds to the movement distance S is provided between the lower portion of the wiper device 30 and the bottom wall 20 of the front cowl 12. However, since the opening 22 is provided in the bottom wall 20, the wiper device 30 is permitted to move downward from the normal position by a distance greater than the movement distance S. That is, the distance that the wiper device 30 can move downward from the normal position is independent of the depth of the front cowl 12. Furthermore, since the lid 24 is formed of elastic material, the lid 24 does not break even if the wiper device 30 moves to the maximum retraction position from the middle retraction position. Therefore, the lid 24 can be repeatedly used.

The lid 24 need not be entirely formed of elastic material. For example, only the portion of the lid 24 that is attached to the bottom wall 20 may be formed of elastic material and the other portion of the lid 24 may be formed of inelastic material.

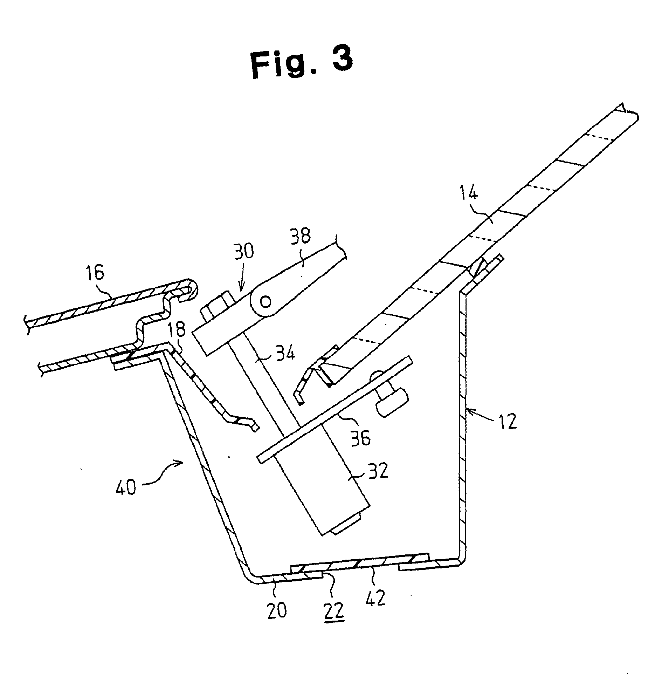

A second embodiment of the present invention will now be described with reference to Fig. 3. The same reference numerals are given to those components that are like or the same as the corresponding components of the first embodiment, and detailed explanations are omitted.

A front structure 40 for a vehicle according to the second embodiment shown in Fig. 3 has basically the same structure as the front structure 10 for the vehicle according to the first embodiment except that the opening 22 of the bottom wall 20 of the front cowl 12 is closed by a closing member, which is a plate-like brittle lid 42 in the second embodiment, instead of the elastic lid 24. The lid 42 is adhered to the portion of the bottom wall 20 around the opening 22 and breaks when receiving a load that is greater than or equal to a predetermined degree.

When an object collides with the wiper device 30 from the above and an impact load is applied to the wiper device 30, the wiper device 30 moves downward from the normal position shown in Fig. 3 in the same manner as the first embodiment. Thus, the wiper device 30 is moved such that the pivot holders 32 abut against the lid 42. In this state, if the wiper device 30 moves further downward, the lid 42 is pressed by the pivot holders 32 and breaks. As a result, the opening 22 is opened to permit the pivot holders 32 to pass through. Therefore, the wiper device 30 can further move downward by a large amount. Thus, the collision energy of the object is absorbed and the impact load applied to the wiper device 30 is reduced.

As described above, in the front structure 40 for the vehicle according to the second embodiment also, only a relatively small space is provided between the lower portion of the wiper device 30 and the bottom wall 20 of the front cowl 12. However, since the opening 22 is provided in the bottom wall 20, the wiper device 30 is permitted to move downward from the normal position by a degree that is greater than the space provided between the lower portion of the wiper device 30 and the bottom wall 20 of the front cowl 12.

The lid 42 may be attached to the portion of the bottom wall 20 around the opening 22 by means other than adhering, such as welding. The lid 42 may be partially precut or part of the lid 42 may be formed thinner than other part so that the lid 42 easily breaks when the wiper device 30 moves downward.

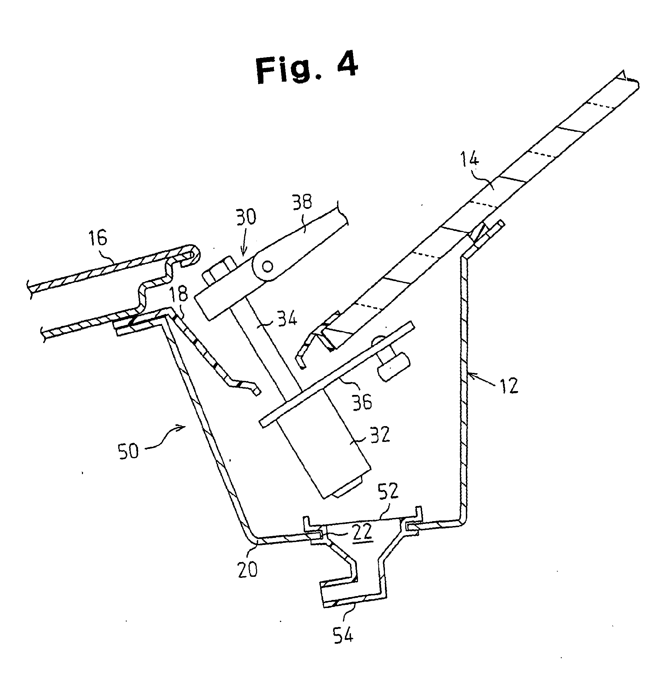

A third embodiment of the present invention will now be described with reference to Fig. 4. The same reference numerals are given to those components that are like or the same as the corresponding components of the first embodiment, and detailed explanations are omitted.

A front structure 50 for a vehicle according to the third embodiment shown in Fig. 4 has basically the same structure as the front structure 10 for the vehicle according to the first embodiment except that the opening 22 of the bottom wall 20 of the front cowl 12 is closed by a closing member, which is a duct member 52 in the third embodiment, instead of the elastic lid 24. The duct member 52 is formed of elastic material like the lid 24 of the first embodiment. The duct member 52 elastically deforms to be detached from the bottom wall 20 when receiving a load that is greater than or equal to a predetermined degree. The duct member 52 includes a drain duct 54 for draining water, such as rain water, collected in the front cowl 12 to the outside of the front cowl 12. Therefore, the front structure 50 for the vehicle according to the third embodiment has an advantage that water collected inside the front cowl 12 can be drained outside the front cowl 12 through the drain duct 54 in addition to the advantages of the front structure 10 for the vehicle according to the first embodiment. Therefore, the wiper motor for driving the wiper device 30 or an electrical connector is prevented in a suitable manner from being immersed in water.

It should be apparent to those skilled in the art that the present invention may be embodied in many other specific forms without departing from the scope of the invention. Particularly, it should be understood that the invention may be embodied in the following forms.

In addition to providing the opening 22 at a portion of the bottom wall 20 below the pivot holders 32, an opening may be formed at a portion of the bottom wall 20 below the wiper motor. The opening 22 corresponding to the pivot holders 32 may be closed by the elastic lid 24 of the first embodiment and the opening corresponding to the wiper motor may be closed by the duct member 52 of the third embodiment. In the case of the modified example, if an object collides with the wiper device 30 from the above, the wiper device 30 is permitted to move downward by a large amount and the wiper motor is prevented in a suitable manner from being immersed in water.

The present examples and embodiments are to be considered as illustrative and not restrictive and the invention is not to be limited to the details given herein.

## Claims

1. A front structure for a vehicle,
a wiper device (30), which is capable of moving downward when receiving an impact load externally;
a front cowl (12), which accommodates at least part of the wiper device, the front cowl having a bottom wall (20) located below the wiper device, **characterized in that** said bottom wall is provided with an opening (22) having a size sufficient for permitting at least part of the wiper device through; and
a closing member (24) for closing the opening, wherein, when the wiper device moves downward, the closing member deforms or breaks to open the opening to permit at least part of the wiper device to pass through.

2. The front structure for the vehicle according to claim 1, **characterized in that** the closing member is a platelike member and is attached to the front cowl, wherein at least part of the closing member that is attached to the front cowl is formed of elastic material so that the closing member deforms to open the opening when receiving a load that is greater than or equal to a predetermined degree.

3. The front structure for the vehicle according to claim 1, **characterized in that** the closing member is a platelike member and is engaged with a portion of the front cowl around the opening, wherein at least part of the closing member that is engaged with the front cowl is elastic so that the closing member deforms to open the opening when receiving a load that is greater than or equal to a predetermined degree.

4. The front structure for the vehicle according to any one of claims 1 to 3, **characterized in that** the closing member has a drain duct (54) for draining water collected inside the front cowl to the outside of the front cowl.

5. The front structure for the vehicle according to any one of claims 1 to 4, **characterized in that** the wiper device includes a wiper pivot (35) having a pivot holder (32) and a pivot shaft (34), the pivot shaft being rotatably supported by the pivot holder, wherein the distal end of the pivot shaft is connected to a wiper arm (38), which has a wiper blade for wiping a wiping surface of the vehicle.

6. The front structure for the vehicle according to claim 5, **characterized in that**, when the wiper device moves downward, the wiper pivot presses the closing member so that the closing member breaks or deforms.

7. The front structure for the vehicle according to claim 6, **characterized in that** the wiper device moves from a normal position to a maximum retraction position via a middle retraction position during retraction, the wiper pivot being apart from the closing member at the normal position, the wiper pivot contacting the closing member at the middle retraction position, and at least part of the wiper pivot passing through the opening at the maximum retraction position, wherein a movement distance (S) of the wiper device from the normal position to the middle retraction position is less than a movement distance (H) of the wiper device from the normal position to the maximum retraction position.

8. The front structure for the vehicle according to claim 7, **characterized in that** a pivot hole (19) is arranged above the bottom wall for permitting the pivot shaft through, wherein the movement distance (H) of the wiper device from the normal position to the maximum retraction position is greater than or equal to the length (K) of the portion of the pivot shaft that projects upward from the pivot hole when the wiper device is located at the normal position.

## Patentansprüche

1. Fahrzeugvorderbau, mit:
einer Wischervorrichtung (30), die in der Lage ist, sich nach unten zu bewegen, wenn sie von außen mit einer Stoßkraft beaufschlagt wird;
einem vorderen Windlauf (12), der zumindest einen Teil der Wischervorrichtung aufnimmt, wobei der vordere Windlauf eine unter der Wischervorrichtung befindliche Bodenwand (20) aufweist, **dadurch gekennzeichnet, daß** die Bodenwand mit einer Öffnung (22) einer Größe versehen ist, die ausreicht, damit zumindest ein Teil der Wischervorrichtung durch diese hindurchlaufen kann, und
mit einem Verschlußteil (24) zum Verschließen der Öffnung, wobei sich das Verschlußteil bei einer Abwärtsbewegung der Wischervorrichtung verformt oder bricht und dabei die Öffnung öffnet, so daß zumindest ein Teil der Wischervorrichtung durch diese hindurchlaufen kann.

2. Fahrzeugvorderbau nach Anspruch 1, **dadurch gekennzeichnet, daß** es sich bei dem Verschlußteil um ein plattenartiges Teil handelt, das am vorderen Windlauf angebracht ist, wobei zumindest ein Teil des am vorderen Windlauf angebrachten Verschlußteils aus einem elastischen Material gebildet ist, so daß das Verschlußteil, wenn es mit einer Kraft beaufschlagt wird, die größer oder gleich einem vorbestimmten Maß ist, sich verformt, um die Öffnung zu öffnen.

3. Fahrzeugvorderbau nach Anspruch 1, **dadurch gekennzeichnet, daß** das Verschlußteil ein plattenartiges Teil ist und mit einem Abschnitt des vorderen Windlaufs um die Öffnung herum in Eingriff steht, wobei zumindest ein Teil des am vorderen Windlauf angebrachten Verschlußteils aus einem elastischen Material gebildet ist, so daß das Verschlußteil, wenn es mit einer Kraft beaufschlagt wird, die größer oder gleich einem vorbestimmten Maß ist, sich verformt, um die Öffnung zu öffnen.

4. Fahrzeugvorderbau nach einem der Ansprüche 1 bis 3, **dadurch gekennzeichnet, daß** das Verschlußteil einen Ableitungskanal (54) aufweist, um Wasser, das sich im Inneren des vorderen Windlaufs angesammelt hat, zur Außenseite des vorderen Windlaufs hin abzuleiten.

5. Fahrzeugvorderbau nach einem der Ansprüche 1 bis 4, **dadurch gekennzeichnet, daß** die Wischervorrichtung einen Wischer-Drehzapfen (35) mit einer Zapfenhalterung (32) und einer Drehwelle (34) umfaßt, wobei die Drehwelle von der Zapfenhalterung verdrehbar abgestützt wird und das distale Ende der Drehwelle mit einem Wischerarm (38) verbunden ist, der ein Wischerblatt zum Wischen einer Wischfläche des Fahrzeugs aufweist.

6. Fahrzeugvorderbau nach Anspruch 5, **dadurch gekennzeichnet, daß**, wenn sich die Wischervorrichtung nach unten bewegt, der Wischer-Drehzapfen so gegen das Verschlußteil drückt, daß es bricht oder sich verformt.

7. Fahrzeugvorderbau nach Anspruch 6, **dadurch gekennzeichnet, daß** die Wischervorrichtung sich beim Einfahren von einer Normalstellung über eine halb eingefahrene Stellung in eine maximal eingefahrene Stellung bewegt, wobei der Wischer-Drehzapfen in der Normalstellung vom Verschlußteil beabstandet ist, in der halb eingefahrenen Stellung am Verschlußteil anliegt und in der maximal eingefahrenen Stellung zumindest ein Teil von ihm durch die Öffnung hindurchläuft, wobei ein Verfahrweg (S) der Wischervorrichtung von der Normalstellung bis zur halb eingefahrenen Stellung kleiner als ein Verfahrweg (H) der Wischervorrichtung von der Normalstellung bis zur maximal eingefahrenen Stellung ist.

8. Fahrzeugvorderbau nach Anspruch 7, **dadurch gekennzeichnet, daß** ein Zapfenloch (19) oberhalb der Bodenwand angebracht ist, damit die Drehwelle durch dieses hindurchlaufen kann, wobei der Verfahrweg (H) der Wischervorrichtung von der Normalstellung bis zur maximal eingefahrenen Stellung größer oder gleich der Länge (K) des Abschnitts der Drehwelle ist, der aus dem Zapfenloch nach oben ragt, wenn sich die Wischervorrichtung in der Normalstellung befindet.

## Revendications

1. Structure avant pour un véhicule,
un dispositif essuie-glace (30) qui peut se déplacer vers le bas lorsqu'il reçoit une force d'impact de l'extérieur ;
un carénage avant (12) dans lequel est logée au moins une partie du dispositif essuie-glace, le carénage avant comportant une paroi inférieure (20) placée en dessous du dispositif essuie-glace et
**caractérisée en ce que** ladite paroi inférieure est munie d'une ouverture (22) dont la taille est suffisante pour permettre le passage d'au moins une partie du dispositif essuie-glace ; et
un élément de fermeture (24) pour fermer l'ouverture, dans laquelle, lorsque le dispositif essuie-glace se déplace vers le bas, l'élément de fermeture se déforme ou se casse pour ouvrir l'ouverture pour permettre le passage d'au moins une partie du dispositif essuie-glace.

2. Structure avant pour un véhicule selon la revendication 1, **caractérisée en ce que** l'élément de fermeture est un élément semblable à une plaque et **en ce qu'**il est fixé au carénage avant, dans laquelle au moins une partie de l'élément de fermeture qui est fixée au carénage avant est constituée d'un matériau élastique de sorte que l'élément de fermeture se déforme pour ouvrir l'ouverture lorsqu'il reçoit une charge qui est supérieure ou égale à un degré prédéterminé.

3. Structure avant pour un véhicule selon la revendication 1, **caractérisée en ce que** l'élément de fermeture est un élément semblable à une plaque et **en ce qu'**il est en prise avec une partie du carénage avant autour de l'ouverture, dans laquelle au moins une partie de l'élément de fermeture qui est en prise avec le carénage est élastique de sorte que l'élément de fermeture se déforme pour ouvrir l'ouverture lorsqu'il reçoit une charge qui est supérieure ou égale à un degré prédéterminé.

4. Structure avant pour un véhicule selon l'une quelconque des revendications 1 à 3, **caractérisée en ce que** l'élément de fermeture comprend un conduit d'écoulement (54) pour l'écoulement de l'eau collectée à l'intérieur du carénage avant vers l'extérieur du carénage avant.

5. Structure avant pour un véhicule selon l'une quelconque des revendications 1 à 4, **caractérisée en ce que** le dispositif essuie-glace comprend un pivot d'essuie-glace (35) muni d'un porte-pivot (32) et d'un axe de pivot (34), l'axe de pivot étant porté de manière rotative par le porte-pivot, dans laquelle l'extrémité distale de l'axe de pivot est raccordée à un bras d'essuie-glace (38) qui comporte une lame d'essuie-glace pour essuyer une surface d'essuyage du véhicule.

6. Structure avant pour un véhicule selon la revendication 5, **caractérisée en ce que**, lorsque le dispositif essuie-glace se déplace vers le bas, le pivot d'essuie-glace écrase l'élément de fermeture de sorte que l'élément de fermeture se casse ou se déforme.

7. Structure avant pour un véhicule selon la revendication 6, **caractérisée en ce que** le dispositif essuie-glace se déplace entre une position normale et une position de rétraction maximale via une position de rétraction médiane pendant la rétraction, le pivot d'essuie-glace étant éloigné de l'élément de fermeture dans la position de rétraction médiane et au moins une partie du pivot d'essuie-glace passant à travers l'ouverture dans la position de rétraction maximale, dans laquelle une distance de mouvement (S) du dispositif essuie-glace entre la position normale et la position de rétraction médiane est inférieure à une distance de mouvement (H) du dispositif essuie-glace entre la position normale et la position de rétraction maximale.

8. Structure avant pour un véhicule selon la revendication 7, **caractérisée en ce qu'**un trou de pivot (19) est disposé au-dessus de la paroi inférieure pour permettre le passage de l'axe de pivot, dans laquelle la distance de mouvement (H) du dispositif essuie-glace entre la position normale et la position de rétraction maximale est supérieure ou égale à la longueur (K) de la partie de l'axe de pivot qui fait saillie vers le haut à partir du trou de pivot lorsque le dispositif essuie-glace est dans la position normale.
